# FASCICULE DE BREVET EUROPEEN

(11) **EP 4 437 244 B1**
(45) Date de publication et mention de la délivrance du brevet: **13.08.2025**
(21) Numéro de dépôt: 22826151.7
(22) Date de dépôt: 23.11.2022
(51) Int. Cl.: F16D 65/06

(54) **SYSTÈME DE FREINAGE FERROVIAIRE POUR VÉHICULE FERROVIAIRE, À FREINS À AU MOINS UN SABOT, ET VÉHICULE FERROVIAIRE POURVU D'UN TEL SYSTÈME**
BREMSSYSTEM FÜR SCHIENENFAHRZEUG MIT KLOTZBREMSEN UND SCHIENENFAHRZEUG, DAS MIT DEM SYSTEM AUSGESTATTET IST
RAILWAY VEHICLE BRAKE SYSTEM, HAVING SHOE BRAKES, AND RAILWAY VEHICLE PROVIDED WITH SAID SYSTEM

(30) Priorité: 24.11.2021 FR 2112438
(43) Date de publication de la demande: 02.10.2024
(73) Titulaire: Wabtec Hauts-de-France, 80000 Amiens (FR)
(72) Inventeur: GONCALVES, Claudino, 80620 RIBEAUCOURT (FR); MAILLARD, Louis, 80136 RIVERY (FR); BLASI, Guewen, 80000 AMIENS (FR); GERBER-PAPIN, Denis, 80830 l'Etoile (FR)
(74) Mandataire: Santarelli
(86) Numéro de dépôt international: PCT/FR2022/052163
(87) Numéro de publication internationale: WO 2023/094768

(56) Documents cités:
- EP-A1- 0 665 153
- EP-A1- 1 910 702
- KR-A- 20190 027 085
- US-A- 3 338 355
- US-A- 4 630 714
- US-A- 5 601 163

## Description

### Domaine technique de l'invention

L'invention concerne le domaine du freinage des véhicules ferroviaires. Elle concerne plus particulièrement un système de freinage ferroviaire à freins à au moins un sabot configuré pour être assujetti sur un support d'un véhicule ferroviaire.

L'invention concerne également un véhicule ferroviaire à freins à au moins un sabot, comportant un tel système freinage et un support sur lequel est assujetti le système freinage.

### Etat de la technique

Les véhicules ferroviaires dits à freins à au moins un sabot, ou à au moins une semelle, ces deux termes étant dans le présent mémoire utilisés indifféremment, sont généralement équipés de systèmes de freinage à cylindres de frein de service et/ou de parking, comportant un piston mobile sous l'effet d'un fluide sous pression, le déplacement de ce piston actionnant un porte-sabot, ou porte-semelle, sur lequel est assujetti mécaniquement au moins le sabot, ou la semelle, et entraînant une action de freinage telle que le serrage le serrage du sabot, ou de la semelle, sur une roue du véhicule. Un exemple d'un tel frein selon l'état de la technique est montré par le document EP 1 910 702 A1.

Un tel système de freinage est monté sur le véhicule ferroviaire, pour être en contact avec une ou plusieurs roues. En particulier, il peut être assujetti mécaniquement sur un bogie, ou bien sur un essieu fixé au bogie, ou encore sur un autre dispositif du type moteur d'entraînement ou boîte de vitesses montés aussi sur le bogie.

Pour ce faire, les systèmes de freinage connus sont pourvus d'un corps formant le cylindre, qui est réalisé en acier et/ou en fonte et dans lequel sont ménagés plusieurs taraudages pour la fixation du support du véhicule.

L'utilisation d'acier et/ou de fonte pour le corps génère un poids relativement important de l'ensemble du système.

### Exposé de l'invention

L'invention concerne un système de freinage ferroviaire à freins à au moins un sabot configuré pour être assujetti sur un support d'un véhicule ferroviaire, qui soit simple, commode et économique.

L'invention a ainsi pour objet, sous un premier aspect, un système de freinage ferroviaire à freins à au moins un sabot, configuré pour être assujetti sur un support d'un véhicule ferroviaire et comportant un corps présentant un ou plusieurs points d'attache pour le support, caractérisé en ce que le corps est réalisé en alliage léger et/ou composite et présente un ou plusieurs premiers trous lisses débouchant au moins sur une face externe du corps, le système de freinage ferroviaire comporte en outre une interface de fixation réalisée à partir d'acier et/ou de fonte et présentant un ou plusieurs premiers orifices taraudés débouchant au moins sur une première face de l'interface de fixation, et un ou plusieurs deuxièmes orifices taraudés débouchant au moins sur une deuxième face de l'interface de fixation, opposée à la première face, et le système de freinage ferroviaire comporte en outre un ou plusieurs premiers organes de fixation pour l'assujettissement mécanique de l'interface de fixation avec le corps ; et le système de freinage ferroviaire est configuré de sorte que la première face de l'interface de fixation est montée en appui contre la face externe du corps, avec le ou les premiers trous lisses du corps qui se trouvent en regard du ou des premiers orifices taraudés de l'interface de fixation et le ou les premiers organes de fixation qui sont introduits dans le ou les premiers trous lisses du corps et le ou les premiers orifices taraudés de l'interface de fixation pour leur assujettissement mécanique, laissant ainsi libre l'accès aux dit un ou plusieurs deuxièmes orifices taraudés pour l'assujettissement mécanique du support du véhicule sur la deuxième face de l'interface de fixation, via un ou plusieurs deuxième organes de fixation.

Du fait que le corps est en alliage léger et/ou composite, le système de freinage ferroviaire présente ainsi un poids réduit par rapport à un système où le corps est en acier et/ou en fonte.

Au surplus, cette réduction de poids et l'utilisation d'un alliage léger et/ou composite n'est pas au détriment de la sécurité de la fixation de ce système au support du véhicule grâce à la présence de l'interface de fixation, ou bride, qui est quant à elle en acier et/ou en fonte.

Autrement dit, le corps en alliage léger et/ou composite présente simplement un ou plusieurs trous lisses, qui ne sont pas soumis à un couple élevé de serrage dans un taraudage. C'est l'interface de fixation qui présente des orifices taraudés et qui d'une part est donc soumise à un couple élevé de serrage issu des premiers organes de fixations pour l'assujettissement du corps avec cette interface de fixation et qui, d'autre part, est configurée pour être soumise à un couple élevé de serrage issu des deuxièmes organes de fixations pour l'assujettissement du support du véhicule sur cette interface de fixation, et donc du système sur le véhicule.

L'utilisation de l'interface de fixation est en outre particulièrement commode en ce qu'il est possible de modifier les entraxes des différents trous et/ou orifices au besoin, et aussi en bien en fonction du corps du système que du support du véhicule.

Des caractéristiques préférées, simples, commodes et économiques du système de freinage ferroviaire selon l'invention sont présentées ci-après.

Le corps peut être réalisé à partir d'aluminium et/ou de magnésium, et/ou à partir de carbone, fibres de carbone ou polymère.

Au moins un premier trou lisse peut déboucher sur la face externe d'un premier côté du corps et d'un deuxième côté du corps opposé à son premier côté, et au moins un premier organe de fixation est monté traversant dans un espace interne du corps.

Au moins un premier trou lisse peut traverser le corps et déboucher sur la face externe d'un premier côté du corps et d'un deuxième côté du corps opposé à son premier côté, et au moins un premier organe de fixation est monté traversant dans le corps.

Le corps peut comporter au moins un troisième trou lisse débouchant dans la face externe du corps, l'interface de fixation peut comporter au moins un quatrième trou lisse débouchant dans sa première face et situé en regard du au moins un troisième trou lisse, et le système de freinage ferroviaire peut comporter un organe de centrage introduit et assujetti mécaniquement dans les au moins un troisième trou lisse et au moins un quatrième trou lisse.

Le système de freinage ferroviaire peut comporter une bague de reprise d'effort réalisée en acier et emmanchée au moins dans l'au moins un troisième trou lisse du corps.

Le système de freinage ferroviaire peut être pourvu d'un porte-sabot assujetti mécaniquement sur au moins un bras d'attache formé d'une seule pièce avec le corps en saillie de sa face externe, d'un ou plusieurs sabot assujettis mécaniquement sur le porte-sabot, d'un mécanisme d'actionnement logé dans le corps et configuré pour agir sur le porte-sabot au moins lorsque le système de freinage ferroviaire est dans une configuration de freinage pour freiner le véhicule ferroviaire, et d'au moins une biellette assujettie mécaniquement à une première extrémité au bras d'attache et à une deuxième extrémité, opposé à la première extrémité, au porte-sabot.

Le système de freinage ferroviaire peut être pourvu d'une paire de bras à laquelle est assujettie une paire de biellettes, chaque biellette étant pourvue d'un cinquième trou lisse traversant à sa deuxième extrémité, et le système de freinage ferroviaire comporte un troisième organe de fixation monté au travers des biellettes et du porte-sabot pour assujettir mécaniquement ensemble les biellettes et le porte-sabot.

Chaque biellette peut comporter une paroi cylindrique présentant un bord fendu, et le système de freinage ferroviaire peut en outre être pourvu d'un organe d'indexation, par exemple une clavette, interposé entre les parois cylindriques des biellettes et coopérant avec les bords fendus respectifs.

L'au moins une biellette peut être réalisée en alliage léger et/ou composite et présenter un sixième trou lisse, l'au moins un bras du corps peut être pourvu d'un septième trou lisse situé en regard du sixième trou lisse de la biellette, et le système de freinage ferroviaire peut en outre être pourvu d'une bague logée au moins partiellement dans l'un du sixième trou lisse de la biellette et du septième trou lisse du bras, et d'un axe introduit dans la bague et emmanché dans l'autre du sixième trou lisse de la biellette et du septième trou lisse du bras.

L'au moins une biellette peut être réalisée en acier et/ou en fonte et présenter un troisième orifice taraudé, l'au moins un bras du corps peut être pourvu d'un septième trou lisse situé en regard du troisième orifice taraudé de la biellette, et le système de freinage ferroviaire peut en outre être pourvu d'une bague logée au moins partiellement dans le septième trou lisse du bras, et d'un axe fileté introduit dans la bague et vissé dans le troisième orifice taraudé de la biellette.

L'invention a aussi pour objet, sous un deuxième aspect, un véhicule ferroviaire à freins à au moins un sabot, comportant un système freinage tel que décrit ci-dessus et un support sur lequel est assujetti le système freinage.

Le support peut être réalisé à partir d'acier et/ou de fonte et être pourvu d'un ou plusieurs quatrièmes orifices taraudés traversant qui sont situés en regard du ou des deuxièmes orifices taraudés sur la deuxième face de l'interface de fixation, et le véhicule ferroviaire comporte un ou plusieurs deuxième organes de fixation montés dans le ou les quatrièmes orifices taraudés et dans le ou les deuxièmes orifices taraudés de l'interface de fixation de sorte à assujettir le support sur l'interface de fixation.

Le corps du système de freinage ferroviaire peut comporter au moins un troisième trou lisse débouchant dans la face externe du corps, l'interface de fixation du système de freinage ferroviaire peut comporter au moins un quatrième trou lisse débouchant dans sa première face et dans sa deuxième face et situé en regard du au moins un troisième trou lisse, le support du véhicule ferroviaire peut comporter au moins un huitième trou lisse traversant, et le système de freinage ferroviaire peut comporter un organe de centrage introduit et assujetti mécaniquement dans les au moins un troisième trou lisse du corps et au moins un quatrième trou lisse de l'interface de fixation et au moins un huitième trou lisse du support.

### Brève description des figures

On va maintenant poursuivre l'exposé de l'invention par la description d'exemples de réalisation, donnée ci-après à titre illustratif et non limitatif, en référence aux dessins annexés.
La figure 1 illustre en perspective un système de freinage ferroviaire pour véhicule ferroviaire, à freins à au moins un sabot, assujetti mécaniquement à un support du véhicule ferroviaire.
La figure 2 est une vue similaire à celle de la figure 1, sans le support du véhicule ferroviaire.
La figure 3 est une vue similaire à celle de la figure 2, mais dépourvue d'une partie avant comportant notamment un dispositif à sabot et des biellettes de transmission d'effort.
La figure 4 est une vue similaire à celle de la figure 3, montrant partiellement le système de freinage en vue de côté.
La figure 5 est une vue en coupe repérée V-V sur la figure 4, mais avec le support visible sur la figure 1.
La figure 6 est une vue similaire à celle de la figure 3, prise selon un angle de vue différent.
La figure 7 est une vue partielle et de côté du système de freinage ferroviaire de la figure 1, et montre en particulier la partie avant comportant notamment le dispositif à sabot et les biellettes de transmission d'effort.
La figure 8 est une vue en coupe partielle repérée VIII-VIII sur la figure 7.
La figure 9 est une vue en coupe partielle repérée IX-IX sur la figure 8.
La figure 10 illustre en perspective isolée et de manière désassemblée les biellettes de transmission d'effort de la partie avant visible sur les figures 7 et 8.
La figure 11 est une similaire à celle de la figure 8, montrant une variante de réalisation de la partie avant du système de freinage ferroviaire.

### Description détaillée

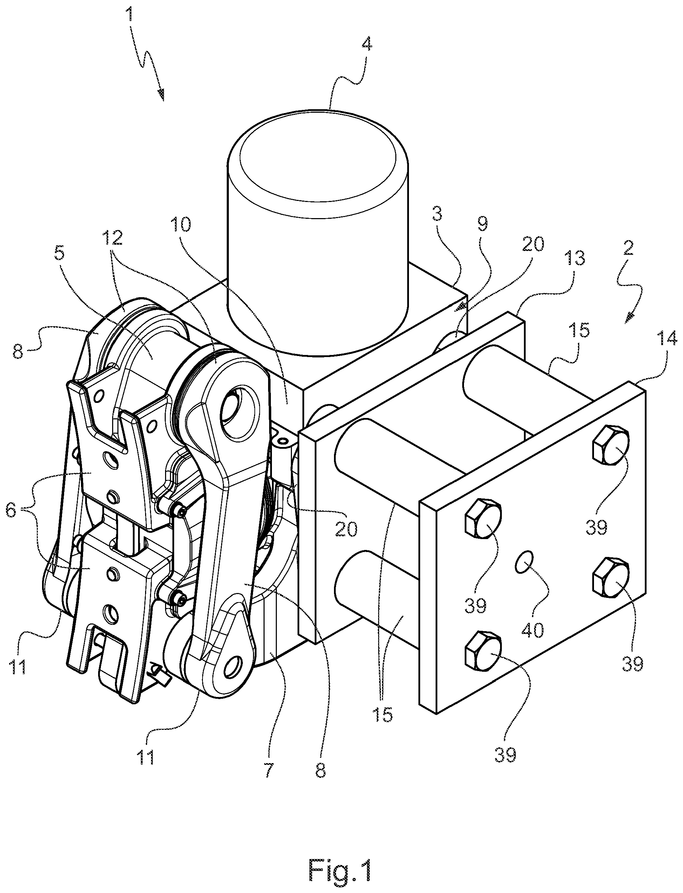

La figure 1 illustre un système de freinage ferroviaire 1 configuré pour être monté sur un véhicule ferroviaire à freins à sabots, par l'intermédiaire d'un support 2 de ce véhicule.

Le système de freinage ferroviaire 1 comporte un corps 3 dans lequel est logé un mécanisme d'actionnement (non visible), un actionneur 4 monté en saillie sur le corps 3 et qui est configuré pour agir sur le mécanisme d'actionnement, et un porte-sabot 5 sur lequel sont assujettis mécaniquement un ou plusieurs sabots 6, ou semelles.

L'actionneur 4 peut être du type pneumatique, hydraulique ou électrique.

Le mécanisme d'actionnement, ensemble l'actionneur 4, peuvent former frein de service et/ou un frein de parking pour le véhicule ferroviaire.

Le corps 3 peut quant à lui être assimilé à un cylindre de frein de service et/ou de frein de parking.

Le corps 3 est réalisé en alliage léger, par exemple à partir d'aluminium et/ou de magnésium.

En variante, le corps peut être réalisé en alliage léger et en composite ou seulement en composite, par exemple à partir de carbone, fibre de carbone, polymère etc.

Le mécanisme d'actionnement logé dans le corps 3, sous l'effet de l'actionneur 4, est configuré pour agir sur le porte-sabot 5 au moins lorsque le système de freinage ferroviaire 1 est dans une configuration de freinage pour freiner le véhicule ferroviaire.

En particulier, le porte-sabot 5 est déplacé de sorte que le ou les sabots 6 viennent en appui contre une roue du véhicule en vue de freiner ce dernier.

Le système de freinage ferroviaire 1 est pourvu ici de deux bras d'attache 7 formés d'une seule pièce avec le corps 3, en saillie d'une face externe 9 du corps 3.

Les bras d'attache 7 s'étendent depuis une paroi avant 10 du corps 3.

Le porte-sabot 5 est assujetti mécaniquement sur les bras d'attache 7.

Le système de freinage ferroviaire 1 comporte en outre deux biellettes 8 configurées pour absorber et transmettre les efforts liés au freinage depuis le porte-sabot 5 vers le reste du système de freinage ferroviaire 1.

Chaque biellette 8 est assujettie mécaniquement par une première extrémité 11 à un bras d'attache 7 respectif et par une deuxième extrémité 12, opposé à la première extrémité 11, au porte-sabot 5.

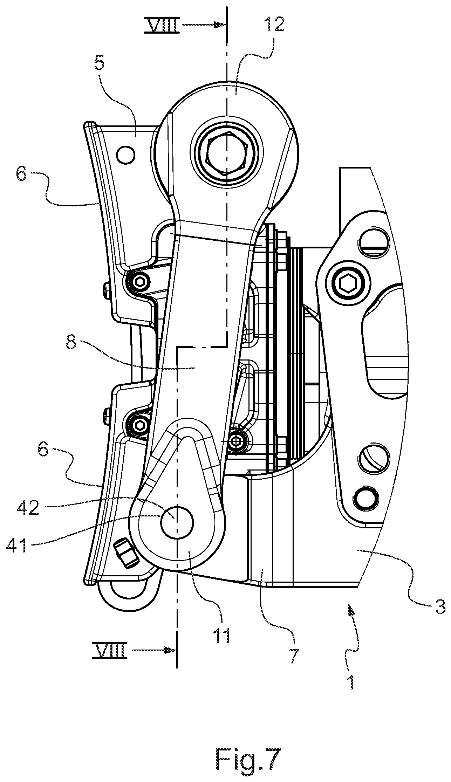

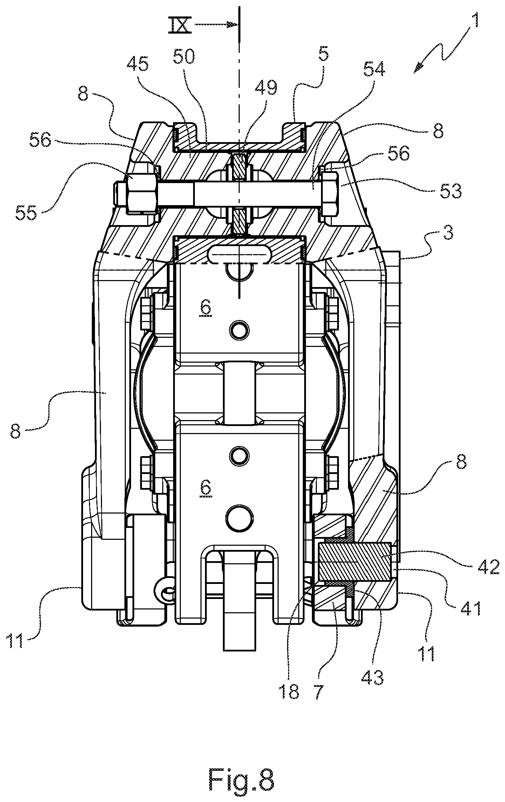

Les détails de fixation des biellettes 8 sur les bras 7 et sur le porte-sabot 5 seront donnés ci-après en référence aux figures 7 à 10 et 11.

Le support 2 du véhicule ferroviaire est réalisé à partir d'acier et/ou de fonte.

Le support 2 comporte ici une première plaque 13, une deuxième plaque 14 et des bras de renfort 15 interposés entre la première plaque 13 et la deuxième plaque 14.

Le système de freinage ferroviaire 1 comporte en outre une interface de fixation 20 qui est interposée entre le corps 3 et le support 2.

L'interface de fixation 20 est réalisée à partir d'acier et/ou de fonte, comme le support 2.

Le support 2 est donc assujetti mécaniquement au corps 3, par sa première plaque 13 et par l'intermédiaire de l'interface de fixation 20.

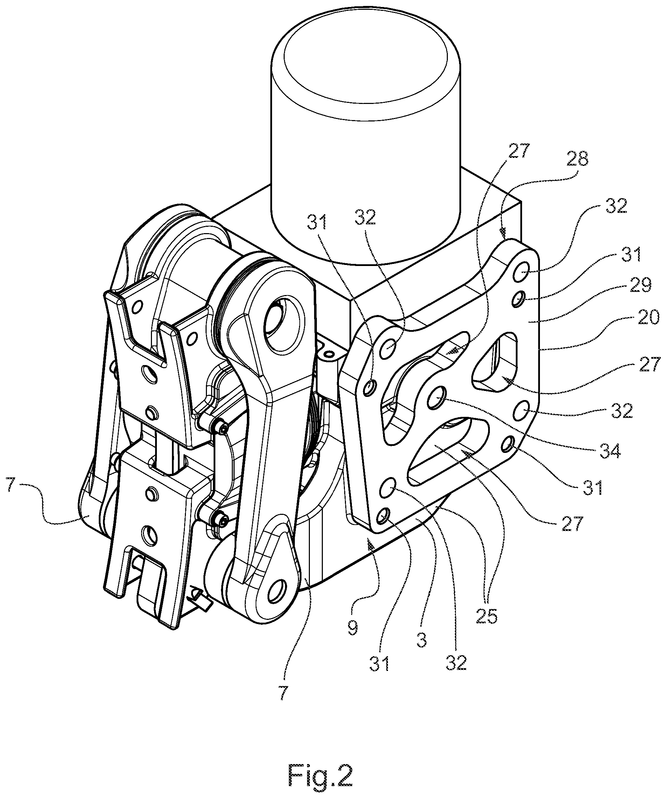

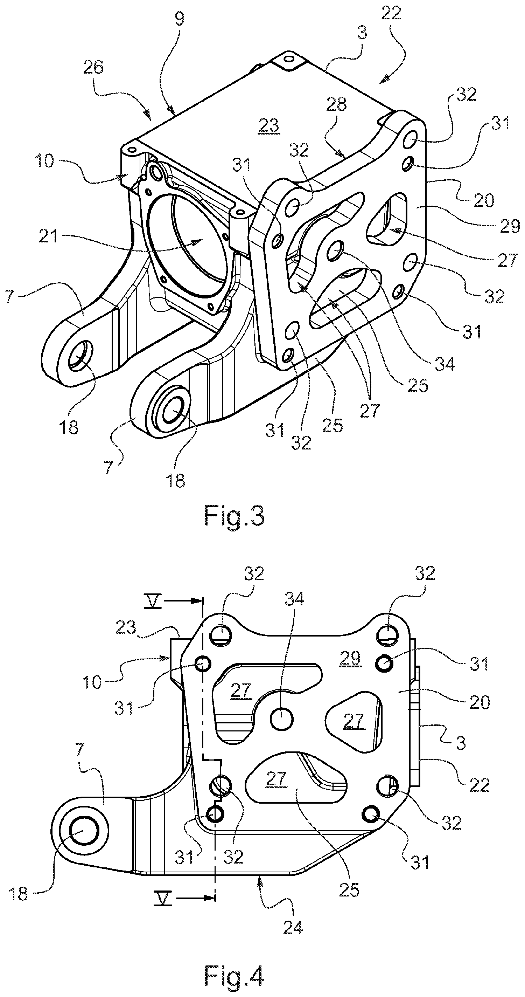

Les figures 2 à 6 montrent plus en détail le corps 2 et l'interface de fixation 20 du système de freinage ferroviaire 1.

Le corps 3 présente ici une forme globalement parallélépipédique définissant la face externe 9 et un espace interne 21.

En particulier, le corps 3 est pourvu de la paroi avant 10 de laquelle saillent les bras d'attache 7, d'une paroi arrière 22 opposée à la paroi avant 21, d'une paroi de dessus 23 rejoignant les parois avant et arrière 10 et 22, d'une paroi de dessous 24 opposée à la paroi de dessus 23 et rejoignant les parois avant et arrière 10 et 22, une première paroi de côté 25 rejoignant les parois avant et arrière 10 et 22 et les de dessus et de dessous 23 et 24, et une deuxième paroi de côté 26 opposée à la première paroi de côté 25 et rejoignant les parois avant et arrière 10 et 22 et les de dessus et de dessous 23 et 24.

Les bras d'attache 7 sont pourvus à leur extrémité respective d'une zone d'attache formée ici par septième trou lisse 18 débouchant.

Dans l'exemple illustré, le corps 3 présente plusieurs points d'attache pour le support 2 via l'interface de fixation 20.

Le corps 3 présente plusieurs premiers trous lisses 30 débouchant sur la face externe 9 du corps 3 et en particulier ici sur chacune des première et deuxième parois de côté 25 et 26.

Les premiers trous lisses 30 s'étendent ici dans tout le corps 3 entre les première et deuxième parois de côté 25 et 26.

Les premiers trous lisses 30 sont ici formés globalement à chaque coin du corps 3.

Le corps 3 comporte ici un troisième trou lisse 33 débouchant dans la face externe 9 du corps 3, et en particulier sur sa première paroi de côté 25.

Dans l'exemple illustré, le troisième trou lisse 33 est borgne.

Le système de freinage ferroviaire 1 comporte une bague de reprise 35 d'effort réalisée en acier et emmanchée dans le troisième trou lisse 33 du corps 3.

L'interface de fixation 20 présente une première face 28 et une deuxième face 29, opposée à la première face 28.

L'interface de fixation 20 a ici une forme de plaque globalement rectangulaire, dans laquelle sont ménagées des évidements 27.

Ces évidements 27 sont essentiellement formés pour limiter la matière de l'interface de fixation 20 qui est réalisée à parti d'acier et/ou de fonte.

Ces évidements 27 débouchent sur ses première et deuxième faces 28 et 29.

L'interface de fixation 20 est pourvue de plusieurs premiers orifices taraudés 31 débouchant ici sur ses première et deuxième faces 28 et 29.

L'interface de fixation 20 est en outre pourvue de plusieurs deuxièmes orifices taraudés 32 débouchant ici aussi sur ses première et deuxième faces 28 et 29.

L'interface de fixation 20 comporte un quatrième trou lisse 34 débouchant ici sur ses première et deuxième faces 28 et 29.

Le système de freinage ferroviaire 1 est configuré de sorte que la première face 28 de l'interface de fixation 20 est montée en appui contre la face externe 9 et en particulier ici la première paroi de côté 25 du corps 3, avec les premiers trous lisses 30 du corps 3 qui se trouvent en regard des premiers orifices taraudés 31 de l'interface de fixation 20.

En outre, le troisième trou lisse 33 du corps 3 est en regard du quatrième trou lisse 34 de l'interface de fixation 20.

On notera que les troisième et quatrième tours lisses sont ici ménagés sensiblement au centre respectivement du corps et de l'interface de fixation.

Le système de freinage ferroviaire 1 comporte en outre plusieurs premiers organes de fixation 36 pour l'assujettissement mécanique de l'interface de fixation 20 avec le corps 3.

Les premiers organes de fixation 36 sont introduits dans les premiers trous lisses 30 du corps 3 et sont assujettis mécaniquement dans les premiers orifices taraudés 31 de l'interface de fixation 20 pour leur assujettissement mécanique.

Les premiers organes de fixation 36 sont montés traversant dans le corps 3, depuis la deuxième paroi de côté 36 jusqu'à la première paroi de côté 25.

Les premiers organes de fixation 36 sont ici formé par des vis qui sont vissées dans les premiers orifices taraudés 31 de l'interface de fixation 20.

Le système de freinage ferroviaire 1 comporte en outre un organe de centrage 37 introduit et assujetti mécaniquement dans le troisième trou lisse 33 du corps 3 qui comporte la bague de reprise d'effort 35 et dans le quatrième trou lisse 34 de l'interface de fixation 20.

L'assemblage tel que décrit ci-dessus de l'interface de fixation 20 sur le corps 3 permet de laisser un libre l'accès à la deuxième face 29 de cette interface de fixation 20 et en particulier à ses deuxièmes orifices taraudés 32, pour l'assujettissement mécanique du support 2 du véhicule sur la deuxième face 29 de l'interface de fixation 20.

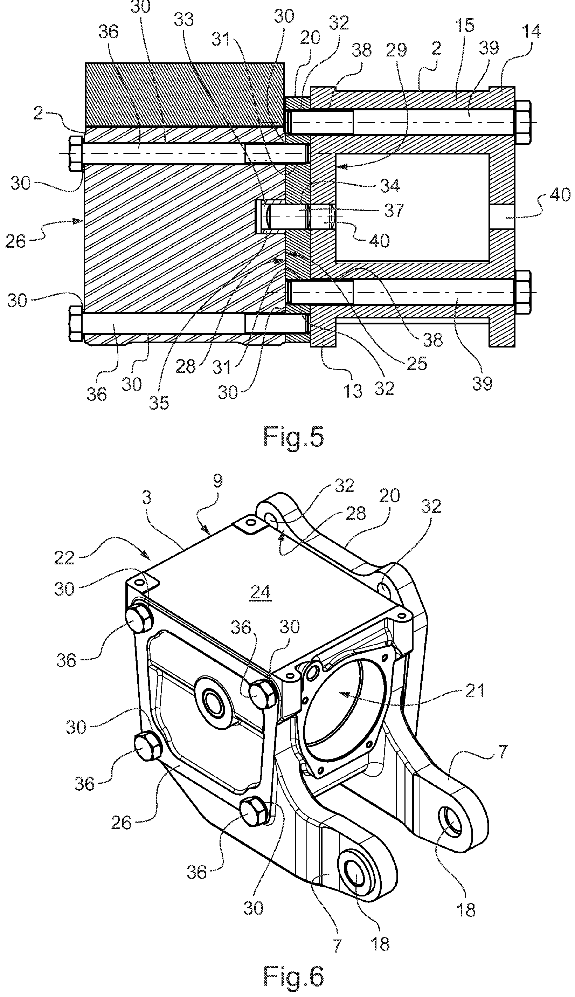

Comme visible sur la figure 5, le support 2 comporte plusieurs quatrièmes orifices taraudés 38 traversant qui sont situés en regard des deuxièmes orifices taraudés 32 sur la deuxième face 29 de l'interface de fixation 20.

Le véhicule ferroviaire comporte plusieurs deuxièmes organes de fixation 39 montés dans les quatrièmes orifices taraudés 38 du support 2 et dans les deuxièmes orifices taraudés 32 de l'interface de fixation 20 de sorte à assujettir le support 2 sur l'interface de fixation 20 (voir figures 1 et 5).

Le support 2 du véhicule ferroviaire comporte ici aussi un huitième trou lisse traversant 40 ménagé dans chacune des première et deuxième plaque 13 et 14.

Les huitièmes trous lisses traversant 40 sont ici situés en regard du quatrième trou lisse 34 de l'interface de fixation 20 et peuvent servir au centrage du support 2 sur l'interface de fixation 20.

Au moins un des huitièmes trous lisses traversant 40 pourrait aussi recevoir l'organe de centrage.

Du fait que le corps 3 est en alliage léger, le système de freinage ferroviaire 1 présente un poids réduit par rapport à un système où le corps est en acier et/ou en fonte.

Au surplus, cette réduction de poids et l'utilisation d'un alliage léger n'est pas au détriment de la sécurité de la fixation de ce système 1 au support 2 du véhicule grâce à la présence de l'interface de fixation 20, ou bride, qui est quant à elle en acier et/ou en fonte.

Autrement dit, le corps 3 en alliage léger présente simplement des trous lisses 30, qui ne sont pas soumis à un couple élevé de serrage. C'est l'interface de fixation 20 qui présente des premiers et deuxièmes orifices taraudés 31 et 32 et qui d'une part est donc soumise à un couple élevé de serrage issu des premiers organes de fixations 36 pour l'assujettissement du corps 3 avec cette interface de fixation 20 et qui, d'autre part, est configurée pour être soumise à un couple élevé de serrage issu des deuxièmes organes de fixations 39 pour l'assujettissement du support 2 du véhicule sur cette interface de fixation 20, et donc du système 1 sur le véhicule.

L'utilisation de l'interface de fixation 20 est en outre particulièrement commode en ce qu'il est possible de modifier les entraxes des différents trous et/ou orifices au besoin, et aussi en bien en fonction du corps 3 du système 1 que du support 2 du véhicule.

En référence aux figures 7 à 10 et 11, il est maintenant décrit l'assujettissement des biellettes 8 aux bras d'attache 7 du corps 3 et au porte-sabot 5 portant le ou les sabots 6, du système de freinage ferroviaire 1.

Dans l'exemple illustré, les biellettes 8 sont réalisées en alliage léger, par exemple à partir d'aluminium et/ou de magnésium.

Chaque biellette 8 présente un sixième trou lisse 41 formé à sa première extrémité 11 et situé en regard du septième trou lisse 18 d'un bras d'attache 7 respectif du corps 3.

Le système de freinage ferroviaire 1 est pourvu de bagues 43 et d'axes 42 pour le montage des biellettes 8 sur les bras d'attache 7.

Chaque bague 43 est ici logée au moins partiellement dans le septième trou lisse 18 du bras d'attache 7 respectif, et chaque axe 42 est introduit dans une bague 43 respective et emmanché dans le sixième trou lisse 41 de la biellette 8 respective.

Chaque biellette 8 est en outre pourvue, à sa deuxième extrémité 12, d'une paroi cylindrique 46 formant manchon, qui est configurée pour être introduite dans un logement 50 formé dans le porte-sabot 5, et d'un cinquième trou lisse 46 traversant la paroi cylindrique 46.

Dans l'exemple illustré, la paroi cylindrique 46 de chaque biellette 8 présente un bord fendu 47 à son extrémité libre respective, formant ainsi des encoches d'indexation 48.

Le système de freinage ferroviaire 1 comporte un organe d'indexation 49 formé ici par une clavette ayant des protubérances d'indexation 52, et interposé entre les parois cylindrique 46 des biellettes 8, avec les protubérances d'indexation 52 qui sont au moins partiellement reçues dans les encoches d'indexation 48 pour le positionnement des biellettes 8 l'une par rapport à l'autre et par rapport au porte-sabot 5.

Le système de freinage ferroviaire 1 comporte en outre un troisième organe de fixation 53 monté au travers des cinquièmes trous lisses 46 des biellettes 8 et donc du logement 50 du porte-sabot 5 pour assujettir mécaniquement ensemble les biellettes 8 et le porte-sabot 5.

Le troisième organe de fixation 53 est ici formé par un système à vis 54, écrou 55 et rondelles 56.

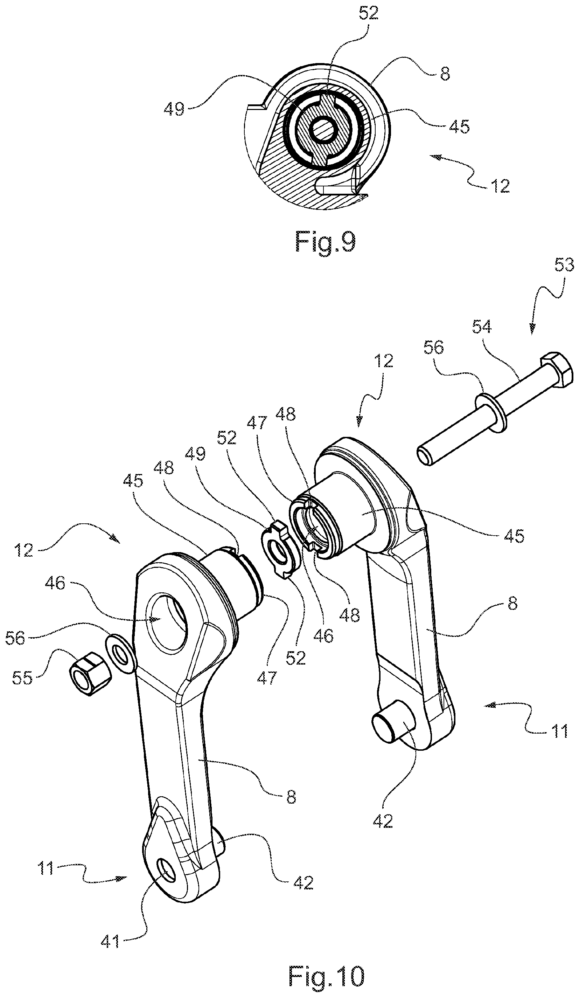

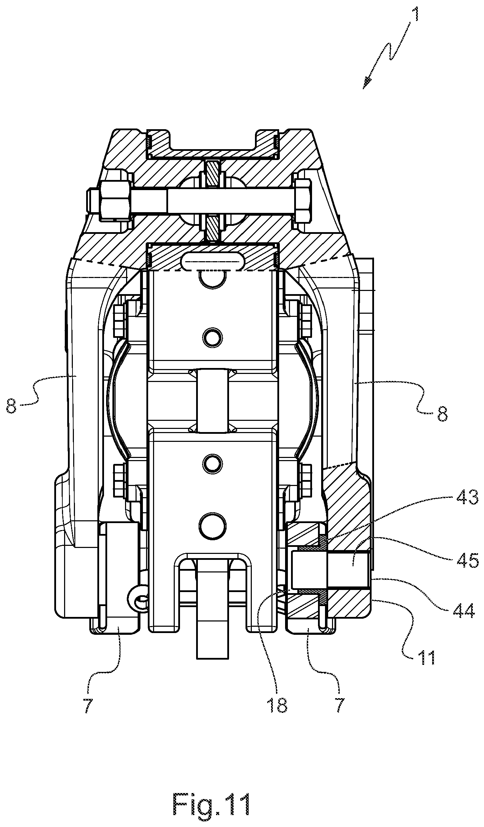

La figure 11 diffère de la figure 10 seulement par le montage des biellettes 8 sur les bras d'attache 7.

En particulier, les biellettes 8 sont plutôt réalisées à partir d'acier et/ou de fonte et présentent chacune un troisième orifice taraudé 44 formé à sa première extrémité 11 et situé en regard du septième trou lisse 18 d'un bras d'attache 7 respectif du corps 3, et dans lequel est vissé un axe fileté 45, lequel axe fileté 45 est aussi introduit dans la bague 43 logée au moins partiellement dans le septième trou lisse 18 du bras d'attache 7 respectif.

Des variantes non illustrées sont décrites ci-dessous.

Les premiers trous lisses peuvent être au nombre de 2, 3 ou plus que 4.

Les premiers trous lisses peuvent déboucher dans l'espace interne du corps et n'être présents que sur la première paroi de côté.

Les premiers organes de fixation peuvent être montés traversant dans l'espace interne du corps.

Les premiers trous lisses peuvent être formés, au moins pour certains, à des endroits différents des coins du corps, par exemple plus au centre.

L'interface de fixation est pourvue de premiers orifices taraudés débouchant seulement sur sa première face.

L'interface de fixation est pourvue de deuxièmes orifices taraudés débouchant seulement sur sa deuxième face.

La bague de reprise d'effort pourrait être logée dans le quatrième trou lisse de l'interface de fixation.

Le système pourrait être dépourvu d'organe de centrage, de la bague de reprise d'efforts et des trous lissés associés.

Les troisième et quatrième tours lisses sont ménagés ailleurs qu'au centre respectivement du corps et de l'interface de fixation.

Le système peut être dépourvu de mécanisme d'indexation des biellettes ou comporter un mécanisme différent de celui décrit ci-dessus.

Plus généralement, l'invention ne se limite pas aux exemples décrits et représentés.

## Revendications

1. Système de freinage ferroviaire à freins à au moins un sabot, configuré pour être assujetti sur un support (2) d'un véhicule ferroviaire et comportant un corps (3) présentant un ou plusieurs points d'attache pour le support, **caractérisé en ce que** le corps est réalisé en alliage léger et/ou composite et présente un ou plusieurs premiers trous lisses (30) débouchant au moins sur une face externe (9) du corps, le système de freinage ferroviaire (1) comporte en outre une interface de fixation (20) réalisée à partir d'acier et/ou de fonte et présentant un ou plusieurs premiers orifices taraudés (31) débouchant au moins sur une première face (28) de l'interface de fixation, et un ou plusieurs deuxièmes orifices taraudés (32) débouchant au moins sur une deuxième face (29) de l'interface de fixation, opposée à la première face, et le système de freinage ferroviaire comporte en outre un ou plusieurs premiers organes de fixation (36) pour l'assujettissement mécanique de l'interface de fixation avec le corps ; et le système de freinage ferroviaire est configuré de sorte que la première face (28) de l'interface de fixation est montée en appui contre la face externe (9) du corps, avec le ou les premiers trous lisses (30) du corps qui se trouvent en regard du ou des premiers orifices taraudés (31) de l'interface de fixation et le ou les premiers organes de fixation (36) qui sont introduits dans le ou les premiers trous lisses (30) du corps et le ou les premiers orifices taraudés (31) de l'interface de fixation pour leur assujettissement mécanique, laissant ainsi libre l'accès aux dit un ou plusieurs deuxièmes orifices taraudés (32) pour l'assujettissement mécanique du support (2) du véhicule sur la deuxième face de l'interface de fixation, via un ou plusieurs deuxième organes de fixation (39).

2. Système de freinage ferroviaire selon la revendication 1, **caractérisé en ce que** le corps (3) est réalisé à partir d'aluminium et/ou de magnésium, et/ou à partir de carbone, fibres de carbone ou polymère.

3. Système de freinage ferroviaire selon l'une des revendications 1 et 2, **caractérisé en ce qu'**au moins un premier trou lisse (30) débouche sur la face externe (9) d'un premier côté du corps (3) et d'un deuxième côté du corps opposé à son premier côté, et au moins un premier organe de fixation (36) est monté traversant dans un espace interne (21) du corps.

4. Système de freinage ferroviaire selon l'une quelconque des revendications 1 à 3, **caractérisé en ce qu'**au moins un premier trou lisse traverse le corps et débouche sur la face externe d'un premier côté du corps et d'un deuxième côté du corps opposé à son premier côté, et au moins un premier organe de fixation est monté traversant dans le corps.

5. Système de freinage ferroviaire selon l'une quelconque des revendications 1 à 4, caractérisé en que le corps (3) comporte au moins un troisième trou lisse (33) débouchant dans la face externe (9) du corps, l'interface de fixation (20) comporte au moins un quatrième trou lisse (34) débouchant dans sa première face (28) et situé en regard du au moins un troisième trou lisse, et le système de freinage ferroviaire (1) comporte un organe de centrage (37) introduit et assujetti mécaniquement dans les au moins un troisième trou lisse et au moins un quatrième trou lisse.

6. Système de freinage ferroviaire selon la revendication 5, **caractérisé en ce qu'**il comporte une bague de reprise d'effort (35) réalisée en acier et emmanchée au moins dans l'au moins un troisième trou lisse (33) du corps (3).

7. Système de freinage ferroviaire selon l'une quelconque des revendications 1 à 6, caractérisé en qu'il est pourvu d'un porte-sabot (5) assujetti mécaniquement sur au moins un bras d'attache (7) formé d'une seule pièce avec le corps (3) en saillie de sa face externe (9), d'un ou plusieurs sabot (6) assujettis mécaniquement sur le porte-sabot, d'un mécanisme d'actionnement logé dans le corps et configuré pour agir sur le porte-sabot au moins lorsque le système de freinage ferroviaire (1) est dans une configuration de freinage pour freiner le véhicule ferroviaire, et d'au moins une biellette (8) assujettie mécaniquement à une première extrémité (11) au bras d'attache et à une deuxième extrémité (12), opposé à la première extrémité, au porte-sabot.

8. Système de freinage ferroviaire selon la revendication 7, **caractérisé en ce qu'**il est pourvu d'une paire de bras (7) à laquelle est assujettie une paire de biellettes (8), chaque biellette étant pourvue d'un cinquième trou lisse (46) traversant à sa deuxième extrémité (12), et le système de freinage ferroviaire (1) comporte un troisième organe de fixation (53) monté au travers des biellettes et du porte-sabot pour assujettir mécaniquement ensemble les biellettes et le porte-sabot.

9. Système de freinage ferroviaire selon la revendication 8, **caractérisé en ce que** chaque biellette (8) comporte une paroi cylindrique (45) présentant un bord fendu (47), et le système de freinage ferroviaire (1) est en outre pourvu d'un organe d'indexation (49), par exemple une clavette, interposé entre les parois cylindriques des biellettes et coopérant avec les bords fendus respectifs.

10. Système de freinage ferroviaire selon l'une quelconque des revendications 7 à 9, **caractérisé en ce que** l'au moins une biellette (8) est réalisée en alliage léger et/ou composite et présente un sixième trou lisse (41), l'au moins un bras d'attache (7) du corps (3) est pourvu d'un septième trou lisse (18) situé en regard du sixième trou lisse de la biellette, et le système de freinage ferroviaire (1) est en outre pourvu d'une bague (43) logée au moins partiellement dans l'un du sixième trou lisse de la biellette et du septième trou lisse du bras, et d'un axe (42) introduit dans la bague et emmanché dans l'autre du sixième trou lisse de la biellette et du septième trou lisse du bras.

11. Système de freinage ferroviaire selon l'une quelconque des revendications 7 à 9, **caractérisé en ce que** l'au moins une biellette (8) est réalisée en acier et/ou en fonte et présente un troisième orifice taraudé (44), l'au moins un bras d'attache (7) du corps (3) est pourvu d'un septième trou lisse (18) situé en regard du troisième orifice taraudé de la biellette, et le système de freinage ferroviaire (1) est en outre pourvu d'une bague (43) logée au moins partiellement dans le septième trou lisse du bras, et d'un axe fileté (45) introduit dans la bague et vissé dans le troisième orifice taraudé de la biellette.

12. Véhicule ferroviaire à freins à au moins un sabot, comportant un système freinage (1) selon l'une quelconque des revendications 1 à 11 et un support (2) sur lequel est assujetti le système freinage.

13. Véhicule ferroviaire selon la revendication 12, **caractérisé en ce que** le support (2) est réalisé à partir d'acier et/ou de fonte et est pourvu d'un ou plusieurs quatrièmes orifices taraudés traversant (38) qui sont situés en regard du ou des deuxièmes orifices taraudés (32) sur la deuxième face (29) de l'interface de fixation (20), et le véhicule ferroviaire comporte un ou plusieurs deuxième organes de fixation (39) montés dans le ou les quatrièmes orifices taraudés et dans le ou les deuxièmes orifices taraudés de l'interface de fixation de sorte à assujettir le support sur l'interface de fixation.

14. Véhicule ferroviaire selon l'une des revendications 12 et 13, **caractérisé en ce que** caractérisé en que le corps (3) du système de freinage ferroviaire (1) comporte au moins un troisième trou lisse (33) débouchant dans la face externe (9) du corps, l'interface de fixation (20) du système de freinage ferroviaire comporte au moins un quatrième trou lisse (34) débouchant dans sa première face (28) et dans sa deuxième face (29) et situé en regard du au moins un troisième trou lisse, le support (2) du véhicule ferroviaire comporte au moins un huitième trou lisse traversant (40), et le système de freinage ferroviaire comporte un organe de centrage (37) introduit et assujetti mécaniquement dans les au moins un troisième trou lisse du corps et au moins un quatrième trou lisse de l'interface de fixation et au moins un huitième trou lisse du support.

## Patentansprüche

1. Eisenbahnbremssystem mit Bremsen mit mindestens einer Bremsbacke, konfiguriert, um an einem Träger (2) eines Eisenbahnfahrzeugs befestigt zu werden, und umfassend einen Körper (3), der einen oder mehrere Befestigungspunkte für den Träger aufweist, **dadurch gekennzeichnet, dass** der Körper aus einer Leichtmetall- und/oder einer Verbundlegierung hergestellt ist und ein oder mehrere erste glatte Löcher (30) aufweist, die mindestens an einer Außenseite (9) des Körpers münden, wobei das Eisenbahnbremssystem (1) ferner eine Befestigungsschnittstelle (20) umfasst, die aus Stahl und/oder Gusseisen hergestellt ist, und eine oder mehrere erste Gewindebohrungen (31) aufweist, die mindestens an einer ersten Seite (28) der Befestigungsschnittstelle münden, und eine oder mehrere zweite Gewindebohrungen (32), die mindestens an einer zweiten Seite (29) der Befestigungsschnittstelle münden, die der ersten Seite gegenüberliegt, und wobei das Eisenbahnbremssystem ferner ein oder mehrere erste Befestigungselemente (36) zur mechanischen Befestigung der Befestigungsschnittstelle am Körper umfasst; und wobei das Eisenbahnbremssystem so konfiguriert ist, dass die erste Seite (28) der Befestigungsschnittstelle an der Außenseite (9) des Körpers anliegt, wobei das bzw. die ersten glatten Löcher (30) des Körpers, die sich gegenüber der ersten Gewindebohrung(en) (31) der Befestigungsschnittstelle befinden, und das bzw. die ersten Befestigungselemente (36), die in das bzw. die ersten glatten Löcher (30) des Körpers und die erste(n) Gewindebohrung(en) (31) der Befestigungsschnittstelle für ihre mechanische Befestigung eingeführt werden, den Zugang zu der einen oder mehreren zweiten Gewindebohrungen (32) für die mechanische Befestigung des Trägers (2) des Fahrzeugs auf der zweiten Seite der Befestigungsschnittstelle über ein oder mehrere zweite Befestigungselemente (39) frei lassen.

2. Eisenbahnbremssystem nach Anspruch 1, **dadurch gekennzeichnet, dass** der Körper (3) aus Aluminium und/oder Magnesium und/oder aus Kohlenstoff, Kohlenstofffasern oder Polymer hergestellt ist.

3. Eisenbahnbremssystem nach einem der Ansprüche 1 und 2, **dadurch gekennzeichnet, dass** mindestens ein erstes glattes Loch (30) an der Außenseite (9) einer ersten Seite des Körpers (3) und einer zweiten Seite des Körpers gegenüber seiner ersten Seite mündet, und mindestens ein erstes Befestigungselement (36) durchgehend in einem inneren Raum (21) des Körpers montiert ist.

4. Eisenbahnbremssystem nach einem der Ansprüche 1 bis 3, **dadurch gekennzeichnet, dass** mindestens ein erstes glattes Loch durch den Körper geht und an der Außenseite einer ersten Seite des Körpers und einer zweiten Seite des Körpers mündet, die seiner ersten Seite gegenüberliegt, und mindestens ein erstes Befestigungselement durchgehend im Körper montiert ist.

5. Eisenbahnbremssystem nach einem der Ansprüche 1 bis 4, **dadurch gekennzeichnet, dass** der Körper (3) mindestens ein drittes glattes Loch (33) aufweist, das in die Außenseite (9) des Körpers mündet, die Befestigungsschnittstelle (20) mindestens ein viertes glattes Loch (34) aufweist, das in seiner ersten Seite (28) mündet und sich gegenüber des mindestens einen dritten glatten Lochs befindet, und das Eisenbahnbremssystem (1) ein Zentrierelement (37) umfasst, das in das mindestens eine dritte glatte Loch und das mindestens eine vierte glatte Loch eingeführt und mechanisch befestigt ist.

6. Eisenbahnbremssystem nach Anspruch 5, **dadurch gekennzeichnet, dass** es einen Kraftübernahmering (35) aus Stahl umfasst, der in mindestens ein drittes glattes Loch (33) des Körpers (3) eingepresst ist.

7. Eisenbahnbremssystem nach einem der Ansprüche 1 bis 6, **dadurch gekennzeichnet, dass** es mit einem Bremsbackenträger (5), der mechanisch an mindestens einem einteiligen Befestigungsarm (7) befestigt ist, der einstückig mit dem Körper (3) ausgebildet ist und von dessen Außenseite (9) vorragt, mit einer oder mehreren Bremsbacken (6), die mechanisch am Bremsbackenträger befestigt sind, mit einem im Körper untergebrachten Betätigungsmechanismus, der so konfiguriert ist, dass er auf den Bremsbackenträger wirkt, wenn sich das Eisenbahnbremssystem (1) in einer Bremskonfiguration zum Bremsen des Eisenbahnfahrzeugs befindet, und mit mindestens einem Gestänge (8) versehen ist, das an einem ersten Ende (11) mechanisch an dem Befestigungsarm und an einem zweiten Ende (12), das dem ersten Ende gegenübersteht, an dem Bremsbackenträger befestigt ist.

8. Eisenbahnbremssystem nach Anspruch 7, **dadurch gekennzeichnet, dass** es mit einem Armpaar (7) versehen ist, an dem ein Gestängepaar (8) befestigt ist, wobei jedes Gestänge an seinem zweiten Ende (12) mit einem durchgehenden fünften glatten Loch (46) versehen ist, und das Eisenbahnbremssystem (1) ein drittes Befestigungselement (53) umfasst, das durch die Gestänge und den Bremsbackenträger montiert ist, um die Gestänge und den Bremsbackenträger mechanisch aneinander zu befestigen.

9. Eisenbahnbremssystem nach Anspruch 8, **dadurch gekennzeichnet, dass** jedes Gestänge (8) eine zylindrische Wand (45) mit einer geschlitzten Kante (47) aufweist, und das Eisenbahnbremssystem (1) ferner mit einem Indexierelement (49) versehen ist, beispielsweise einem Schlüssel, der zwischen den zylindrischen Wänden der Gestänge eingelegt ist und mit den jeweiligen geschlitzten Kanten zusammenarbeitet.

10. Eisenbahnbremssystem nach einem der Ansprüche 7 bis 9, **dadurch gekennzeichnet, dass** das mindestens eine Gestänge (8) aus einer Leichtmetall- und/oder einer Verbundlegierung hergestellt ist und ein sechstes glattes Loch (41) aufweist, der mindestens eine Befestigungsarm (7) des Körpers (3) mit einem siebten glatten Loch (18) versehen ist, das sich gegenüber dem sechsten glatten Loch des Gestänges befindet, und das Eisenbahnbremssystem (1) ferner mit einem Ring (43), der mindestens teilweise in einem von dem sechsten glatten Loch des Gestänges und dem siebten glatten Loch des Arms untergebracht ist, und mit einem Bolzen (42) versehen ist, der in den Ring eingeführt und in das andere von dem sechsten glatten Loch des Gestänges und dem siebten glatten Loch des Arms eingepresst ist.

11. Eisenbahnbremssystem nach einem der Ansprüche 7 bis 9, **dadurch gekennzeichnet, dass** das mindestens eine Gestänge (8) aus Stahl und/oder Gusseisen hergestellt ist und eine dritte Gewindebohrung (44) aufweist, der mindestens eine Befestigungsarm (7) des Körpers (3) mit einem siebten glatten Loch (18) versehen ist, das sich gegenüber der dritten Gewindebohrung des Gestänges befindet, und das Eisenbahnbremssystem (1) ferner mit einem Ring (43), der mindestens teilweise in dem siebten glatten Loch des Arms untergebracht ist, und einem Gewindeachse (45) versehen ist, der in den Ring eingeführt und in die dritte Gewindebohrung des Gestänges geschraubt ist.

12. Eisenbahnfahrzeug mit Bremsen mit mindestens einem Bremsschuh, umfassend ein Bremssystem (1) nach einem der Ansprüche 1 bis 11 und ein Träger (2), an dem das Bremssystem befestigt ist.

13. Eisenbahnfahrzeug nach Anspruch 12, **dadurch gekennzeichnet, dass** der Träger (2) aus Stahl und/oder Gusseisen hergestellt ist und mit einer oder mehreren vierten durchgehenden Gewindebohrungen (38) versehen ist, die gegenüber der oder den zweiten Gewindebohrungen (32) auf der zweiten Seite (29) der Befestigungsschnittstelle (20) liegen, und das Eisenbahnfahrzeug ein oder mehrere zweite Befestigungselemente (39) aufweist, die in die vierte(n) Gewindebohrung(en) und in die zweite(n) Gewindebohrung(en) der Befestigungsschnittstelle montiert sind, um den Träger an der Befestigungsschnittstelle zu befestigen.

14. Eisenbahnfahrzeug nach einem der Ansprüche 12 und 13, **dadurch gekennzeichnet, dass** der Körper (3) des Eisenbahnbremssystems (1) mindestens ein drittes glattes Loch (33) aufweist, das in die Außenseite (9) des Körpers mündet, die Befestigungsschnittstelle (20) des Eisenbahnbremssystems mindestens ein viertes glattes Loch (34) aufweist, das in seine erste Seite (28) und in seine zweite Seite (29) mündet und sich gegenüber dem mindestens einen dritten glatten Loch befindet, wobei der Träger (2) des Eisenbahnfahrzeugs mindestens ein achtes durchgehendes glattes Loch (40) aufweist, und das Eisenbahnbremssystem ein Zentrierelement (37) aufweist, das in das mindestens eine dritte glatte Loch des Körpers und das mindestens eine vierte glatte Loch der Befestigungsschnittstelle und das mindestens eine achte glatte Loch des Trägers eingeführt und mechanisch befestigt wird.

## Claims

1. A railway braking system having brakes with at least one shoe, configured to be mechanically connected to a support (2) of a railway vehicle and including a body (3) having one or more attachment points for the support, **characterised in that** the body is made of light alloy and/or composite and has one or more first smooth holes (30) opening at least onto an outer face (9) of the body, the railway braking system (1) further includes a fastening interface (20) made from steel and/or cast iron and having one or more first tapped orifices (31) opening at least onto a first face (28) of the fastening interface, and one or more second tapped orifices (32) opening at least onto a second face (29) of the fastening interface, opposite to the first face, and the railway braking system further includes one or more first fastening members (36) for mechanical connecting the fastening interface to the body ; and the railway braking system is configured so that the first face (28) of the fastening interface is mounted so as to bear against the outer face (9) of the body, with the first smooth hole(s) (30) of the body being situated facing the first tapped orifice(s) (31) of the fastening interface and the first fastening member(s) (36) being introduced into the first smooth hole(s) (30) of the body and the first tapped orifice(s) (31) of the fastening interface for mechanical connecting thereof, thus leaving access free to said one or more second tapped orifices (32) for mechanical connecting the support (2) of the vehicle to the second face of the fastening interface, via one or more second fastening members (39).

2. The railway braking system according to claim 1, **characterised in that** the body (3) is made from aluminium and/or magnesium, and/or from carbon, carbon fibres or polymer.

3. The railway braking system according to one of claims 1 and 2, **characterised in that** at least one first smooth hole (30) opens onto the outer face (9) of a first side of the body (3) and of a second side of the body opposite to its first side, and at least one first fastening member (36) is mounted so as to pass through into an inner space (21) of the body.

4. The railway braking system according to any of claims 1 to 3, **characterised in that** at least one first smooth hole passes through the body and opens onto the outer face of a first side of the body and of a second side of the body opposite to its first side, and at least one first fastening member is mounted so as to pass through into the body.

5. The railway braking system according to any of claims 1 to 4, **characterized in that** the body (3) includes at least one third smooth hole (33) opening into the outer face (9) of the body, the fastening interface (20) includes at least one fourth smooth hole (34) opening into its first face (28) and located facing the at least one third smooth hole, and the railway braking system (1) includes a centring member (37) introduced into and mechanically connected into the at least one third smooth hole and the at least one fourth smooth hole.

6. The railway braking system according to claim 5, **characterised in that** it includes a force take-up bushing (35) made of steel and fitted at least into the at least one third smooth hole (33) of the body (3).

7. The railway braking system according to any of claims 1 to 6, **characterised in that** it is provided with a shoe holder (5) mechanically connected to at least one attachment arm (7) formed as a single piece with the body (3) projecting from its outer face (9), with one or more shoes (6) mechanically connected to the shoe holder, with an actuating mechanism housed in the body and configured to act on the shoe holder at least when the railway braking system (1) is in a braking configuration to brake the railway vehicle, and with at least one link (8) mechanically connected at a first end (11) to the attachment arm and at a second end (12), opposite to the first end, to the shoe holder.

8. The railway braking system according to claim 7, **characterised in that** it is provided with a pair of arms (7) to which a pair of links (8) is mechanically connected, each link being provided with a through fifth smooth hole (46) at its second end (12), and the railway braking system (1) includes a third fastening member (53) mounted through the links and the shoe holder to mechanically connect the links and the shoe holder together.

9. The railway braking system according to claim 8, **characterised in that** each link (8) includes a cylindrical wall (45) having a slotted edge (47), and the railway braking system (1) is further provided with an indexing member (49), for example a key, interposed between the cylindrical walls of the links and cooperating with the respective slotted edges.

10. The railway braking system according to any of claims 7 to 9, **characterised in that** the at least one link (8) is made of light alloy and/or composite and has a sixth smooth hole (41), the at least one attachment arm (7) of the body (3) is provided with a seventh smooth hole (18) located facing the sixth smooth hole of the link, and the railway braking system (1) is further provided with a bushing (43) housed at least partially in one of the sixth smooth hole of the link and the seventh smooth hole of the arm, and with a pin (42) introduced into the bushing and fitted into the other of the sixth smooth hole of the link and the seventh smooth hole of the arm.

11. The railway braking system according to any of claims 7 to 9, **characterised in that** the at least one link (8) is made of steel and/or cast iron and has a third tapped orifice (44), the at least one attachment arm (7) of the body (3) is provided with a seventh smooth hole (18) located facing the third tapped orifice of the link, and the railway braking system (1) is further provided with a bushing (43) housed at least partially in the seventh smooth hole of the arm, and with a threaded pin (45) introduced into the bushing and screwed into the third tapped orifice of the link.

12. A railway vehicle having brakes with at least one shoe, including a braking system (1) according to any of claims 1 to 11 and a support (2) to which the braking system is mechanically connected.

13. The railway vehicle according to claim 12, **characterised in that** the support (2) is made from steel and/or cast iron and is provided with one or more through fourth tapped orifices (38) which are located facing the second tapped orifice(s) (32) on the second face (29) of the fastening interface (20), and the railway vehicle includes one or more second fastening members (39) mounted into the fourth tapped orifice(s) and into the second tapped orifice(s) of the fastening interface so as to mechanically connect the support to the fastening interface.

14. The railway vehicle according to one of claims 12 and 13, **characterised in that** the body (3) of the railway braking system (1) includes at least one third smooth hole (33) opening into the outer face (9) of the body, the fastening interface (20) of the railway braking system includes at least one fourth smooth hole (34) opening into its first face (28) and into its second face (29) and located facing the at least one third smooth hole, the support (2) of the railway vehicle includes at least one through eighth smooth hole (40), and the railway braking system includes a centring member (37) introduced and mechanically connected into the at least one third smooth hole of the body and at least one fourth smooth hole of the fastening interface and at least one eighth smooth hole of the support.
